# EUROPEAN PATENT APPLICATION

(11) **EP 1 244 005 A2**
(43) Date of publication of application: **25.09.2002**
(21) Application number: 02005662.8
(22) Date of filing: 12.03.2002
(51) Int. Cl.: G06F 3/14

(54) **Display of image with format conversion in response to printing instruction**

(30) Priority: 19.03.2001 JP 2001078165
(71) Applicant: SEIKO EPSON CORPORATION, Shinjuku-ku, Tokyo 163-0811 (JP)
(72) Inventor: Tsukinokizawa, Chihiro, Suwa-shi, Nagano-ken, 392-8502 (JP)
(74) Representative: Hoffmann, Eckart, Dipl.-Ing.

(57) **Abstract**

An image supply apparatus includes: an image generation module that generates first video data representing an image of interest to be printed, in response to a printing instruction; and a video data conversion processing module that receives the generated first video data, converts the first video data into second video data in a specific format that is receivable by an image display apparatus, and transmits the converted second video data via a predetermined communication interface. The image display apparatus includes: a video data receiving and processing module that receives the second video data via the predetermined communication interface and converts the input second video data into third video data in a specified displayable format; and an image display module that displays an image corresponding to the converted third video data. This arrangement enables the image display apparatus to display an image according to the novel technique.

## Description

### BACKGROUND OF THE INVENTION

### 1. Field of the Invention

The present invention relates to a technique of displaying an image expressed by video data supplied from a computer.

### 2. Description of the Related Art

Projectors are capable of enlarging and projecting image and are thus widely used to display various documentation for lectures and presentations and advertisements in various shops and showrooms.

Images generated by the computer are projected and displayed by the projector according to one of two methods discussed below.

The first method inputs a video signal generated by the computer and output from a video output terminal of the computer into a video signal input terminal of the projector and displays an image expressed by the video signal generated by the computer.

The second method converts video data generated by the computer into a data file and supplies the data file to the projector via a recording medium like a memory card or any of diverse communication lines like a network. An application program (viewer) corresponding to the supplied data file is executed in the projector to reproduce and display an image expressed by the data file. The viewer represents a software program having the function of reproducing the displaying the video data file.

In the first method, the display operations of the projector are performed under control of the computer. The operations of the computer are thus inseparable from the display control operations of the projector.

In the second method, the operations of the computer are separable from the display control operations of the projector. The second method, however, requires the viewer corresponding to the video data file to enable the projector to display images. Different viewers are required corresponding to respective types of video data files and corresponding to respective versions of the application program used for generating the video data files.

As described above, these two prior art methods have intrinsic problems. It is thus highly demanded to develop a novel technique of displaying images, which has overcome these problems. These problems are not restricted to the projector but are commonly found in diverse image display apparatuses.

### SUMMARY OF THE INVENTION

The object of the present invention is thus to display an image according to a novel technique, which has solved the problems arising in the two prior art methods discussed above.

At least part of the above and the other related objects is actualized by an image display system, which includes: an image supply apparatus that supplies video data via a predetermined communication interface in response to a printing instruction; and an image display apparatus that receives the video data from the image supply apparatus via the predetermined communication interface and displays an image expressed by the video data. The image supply apparatus has: an image generation module that generates first video data representing an image of interest to be printed, in response to the printing instruction; and a video data conversion processing module that receives the generated first video data, converts the first video data into second video data in a specific format that is receivable by the image display apparatus, and transmits the converted second video data via the predetermined communication interface. The image display apparatus has: a video data receiving and processing module that receives the second video data via the predetermined communication interface and converts the received second video data into third video data in a specified displayable format; and an image display module that displays an image corresponding to the converted third video data.

In the image display system of the present invention, in response to a printing instruction, the image supply apparatus converts first video data representing an image of interest to be printed into second video data in a specific format that is receivable by the image display apparatus. The second video data is transmitted to the image display apparatus via the predetermined communication interface. The image display apparatus converts the received second video data into third video data in a specified displayable form and displays an image expressed by the converted third video data. This arrangement ensures display of an image by the novel technique, which has solved the problems arising in the two prior art methods discussed previously.

In accordance with one preferable application of the present invention, the image display system includes a plurality of the image display apparatuses. The image supply apparatus has a plurality of the video data conversion processing modules corresponding to the plurality of image display apparatuses. In the image supply apparatus, the video data conversion processing module corresponding to one image display apparatus selected among the plurality of image display apparatuses receives the first video data generated in response to the printing instruction, converts the received first video data into second video data in a specific format that is receivable by the selected image display apparatus, and transmits the converted second video data to the selected image display apparatus via the predetermined communication interface.

This arrangement enables an image to be displayed by one image display apparatus arbitrarily selected among the plurality of image display apparatuses, in response to the printing instruction.

The present invention is also directed to an image display apparatus that displays an image expressed by video data, which is supplied from an image supply apparatus via a predetermined communication interface in response to a printing instruction. The image display apparatus includes: a video data receiving and processing module that receives the video data, which has been transmitted from the image supply apparatus to the image display apparatus via the predetermined communication interface in response to the printing instruction, and converts the received video data into video data in a specified displayable format; and an image display module that displays an image corresponding to the video data converted by the video data receiving and processing module.

Application of this image display apparatus to the image display system of the present invention ensures display of an image by the novel technique, which has solved the problems arising in the two prior art methods discussed previously.

The image display apparatus may be a projector having a projection display function, which causes the image display module to project an image.

The technique of the present invention may be actualized by a diversity of applications other than the image display system and the image display apparatus described above; for example, an image display method corresponding to the image display system, computer programs for attaining any of these system, apparatus, and method, computer readable recording media in which such computer programs are recorded, and data signals that include such computer programs and are embodied in carrier waves.

### BRIEF DESCRIPTION OF THE DRAWINGS

Fig. 1 is a block diagram illustrating the construction of a projection system in one embodiment of the present invention;
Fig. 2 is a block diagram conceptually showing the software configuration relating to processing of a computer PC to generate video data;
Fig. 3 shows a print dialog box opened on a monitor 150 by an application program 110;
Fig. 4 is a block diagram schematically illustrating the internal structure of a projector PJ;
Fig. 5 is a flowchart showing a processing routine executed by a projection data receiver 322; and
Fig. 6 is a block diagram illustrating the construction of another projection system according to the present invention.

### DESCRIPTION OF THE PREFERRED EMBODIMENTS

One mode of carrying out the present invention is discussed below as a preferred embodiment in the following sequence:
A. Projection System
   A1. Construction and Operations of Computer PC
   A2. Construction and Operations of Projector PJ
B. Application of Projection System
C. Modifications
   C1. Modified Example 1
   C2. Modified Example 2
   C3. Modified Example 3

### A. Projection System

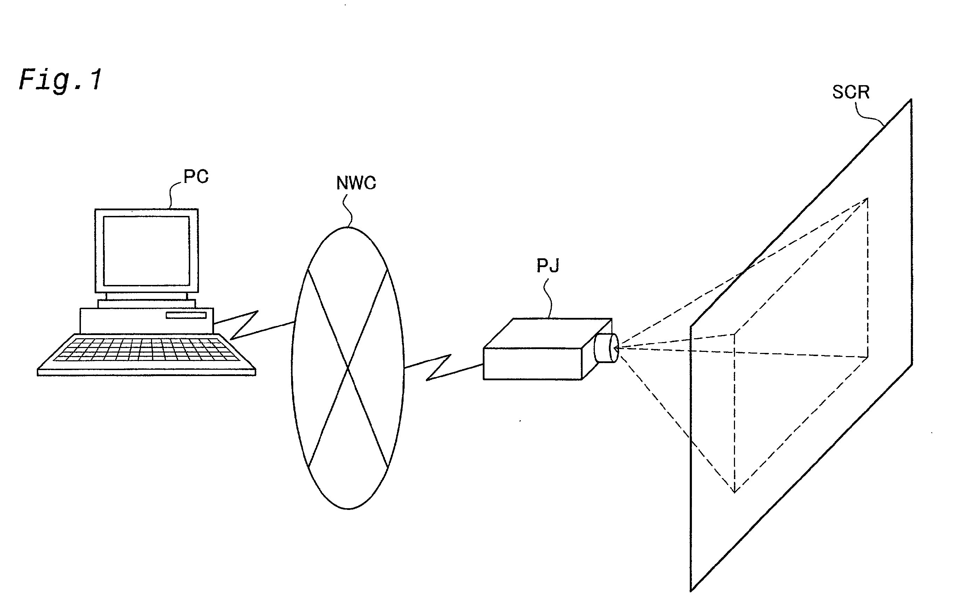

Fig. 1 is a block diagram illustrating the construction of a projection system in one embodiment of the present invention. This projection system includes a computer PC functioning as an image supply apparatus and a projector PJ functioning as an image display apparatus.

The projector PJ is connected to the computer PC via a network NWC, to which servers (not shown) and a diversity of electronic devices like printers are connected.

The computer PC may be any of diverse computers including personal computers, mobile computers, information processing terminals, work stations and other computers connectable to the network.

In this projection system, video data is generated by an application program executed in the computer PC. The generated video data is supplied to the projector PJ via the network NWC in response to output of a printing instruction from the application program, as discussed later. The projector PJ processes the video data supplied from the computer PC sand projects an image on a screen SCR.

The following describes a procedure of projecting and displaying an image in this projection system as the construction and operations of the computer PC and the construction and operations of the projector PJ.

### A1. Construction and Operations of Computer PC

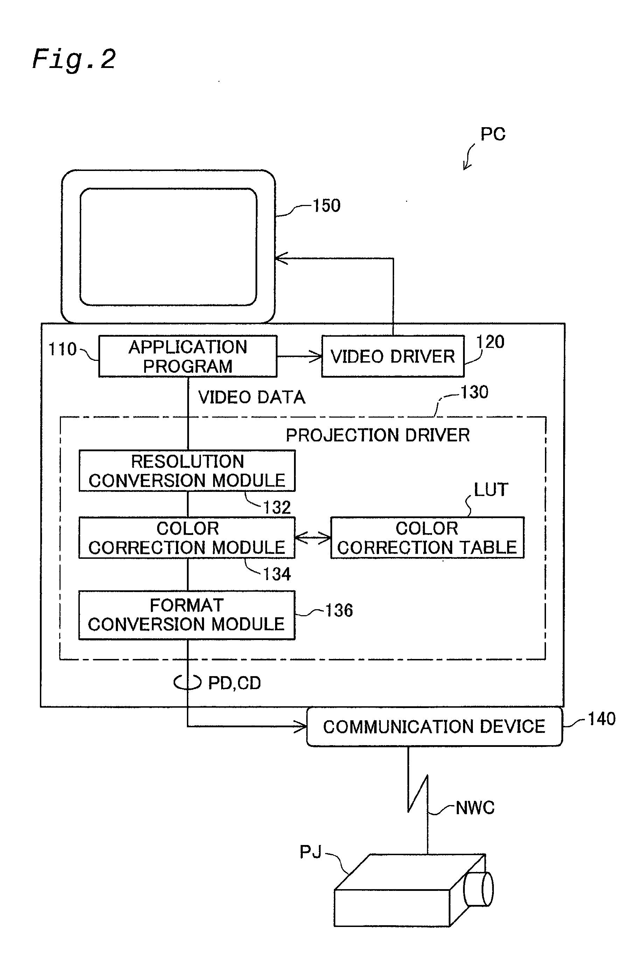

Fig. 2 is a block diagram conceptually showing the software configuration relating to processing of a computer PC to generate video data. In the computer PC, an application program 110 works under a predetermined operating system. A video driver 120, a projection driver 130, and a diversity of other drivers (not shown) are incorporated in the operating system, and the corresponding peripheral devices are controlled via these drivers. For example, the application program 110 causes images to be displayed on a monitor 150 via the video driver 120.

Data including projection data PD and control data CD, which is to be transmitted to the projector PJ, is output from the application program 110 via the projection driver 130 as discussed later. The output data is transferred to the projector PJ via the network NWC by means of a communication device 140. Any of diverse networks, such as the Internet, an Intranet, a Local Area Network (LAN), and a Wide Area Network (WAN) is applicable to the network NWC. The communication device 140 may be a modem, a terminal adaptor, or a network card selected according to the type of the network NWC.

Here the application program 110 regards the projection driver 130 as a driver equivalent to a printer driver, and the projector PJ as a device equivalent to a printer.

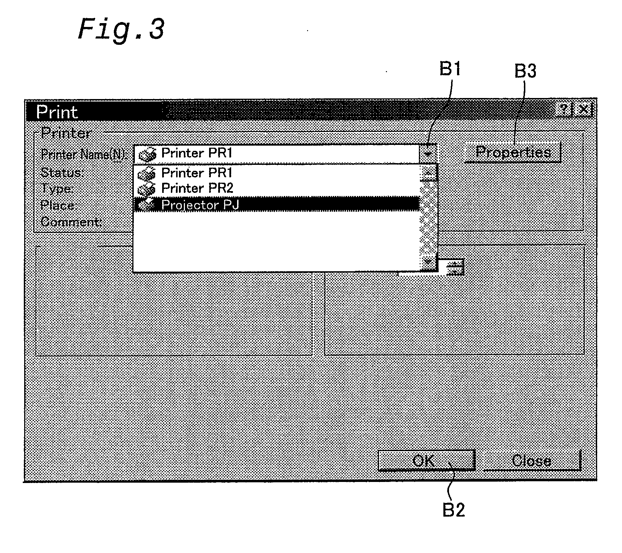

Fig. 3 shows a print dialog box opened on the monitor 150 by the application program 110. The dialog box (menu window) of Fig. 3 shows an exemplified print dialog box when Word 2000 (trade mark by Microsoft Corporation) is executed as the application program 110. This dialog box is open in response to selection of a 'Print' menu in a file menu of Word 2000. The upper-most input box 'Printer Name' shows the name of a device, to which video data is output from the application program 110 in response to issuance of a printing instruction. In the case where there are multiple available devices for output, the user clicks an 'Arrow' button B1 to open a pull-down menu including the names of all the available devices for output, below the 'Printer Name' input box. As mentioned previously, the projector PJ is regarded as a device equivalent to printers and is included in this pull-down menu like printers PR1 and PR2.

When the user selects either the printer PR1 or the printer PR2 and clicks an 'OK' button B2 on the right bottom of the dialog box to issue a printing instruction, the printer driver corresponding to the selected printer receives video data of interest, which is an object of printing, from the application program 110, causes the input video data to be subjected to a required series of processing, and outputs resulting print data to the selected printer.

When the user selects the projector PJ and clicks the 'OK' button B2 to issue a printing instruction, on the other hand, the projection driver 130 (see Fig. 2) receives video data representing an image of interest to be printed (object image) from the application program 110 and causes the input video data to be subjected to a predetermined series of image processing, so as to convert the input video data into projection data PD, which is in a specific format enabling supply to the projector PJ. In the embodiment shown in Fig. 2, a resolution conversion module 132, a color correction module 134, a format conversion module 136, and a color correction lookup table LUT are provided inside the projection driver 130. The details of image processing executed in the respective modules are discussed below. The video data input into the projection driver 130 is subjected to the processing executed in these modules and is output as final projection data PD to the projector PJ via the network NWC by means of the communication device 140.

The resolution conversion module 132 functions to convert the resolution (that is, the number of pixels per unit length) of video data output from the application program 110 into a resolution displayable by the projector PJ. Here the video data is image information consisting of three color components. The color correction module 134 refers to the color correction lookup table LUT and converts RGB video data into color corrected video data having a characteristic according to color adjustment information discussed later with regard to each pixel. The color corrected video data has, for example, tone values in a 256 tone range. The format conversion module 136 rearranges the color corrected video data in an order of data to be transferred to the projector PJ and outputs the rearranged data as the final projection data PD.

The projection driver 130 corresponds to a program for actualizing the function of generating the projection data PD. The program for actualizing the function of the projection driver 130 is supplied in a form recorded in a computer readable recording medium. Typical examples of the recording medium include flexible disks, CD-ROMs, magneto-optic discs, IC cards, ROM cartridges, punched cards, prints with barcodes or other codes printed thereon, internal storage devices (memories like a RAM and a ROM) and external storage devices of the computer, and a variety of other computer readable media.

When the user clicks a 'Properties' button B3 in the dialog box shown in Fig. 3, a control information setting window for the projector PJ is open to enable the user to set diverse control information. The control information includes, for example, 'display resolution information', 'object image size information', 'color adjustment information', 'display layout information', and 'page control information'.

The 'display resolution information' represents a display resolution (number of pixels) of the projector PJ. When the projector PJ allows display at a plurality of display resolutions, a desired display resolution is set to the 'display resolution information'.

The 'object image size information' represents the size of an object image output from the application program 110 (generally specified by the size of an original image).

The 'color adjustment information' represents various pieces of information relating to the picture quality of the displayed image, for example, the brightness of the image, the contrast, the saturation, the tone, and the type of the image. The type of the image is expressed, for example, as a graphic image, a natural image, or an animation image.

The 'display layout information' specifies a desired part of the image to be displayed, out of the whole object image.

When multiple pages of video data are output from the application program 110 as the object to be printed, the 'page control information' specifies how the images of the multiple pages are to be displayed. Various pieces of information, for example, information specifying that 'control of display is set in the projector' and information specifying that 'the multiple pages of video data are automatically displayed in a sequential manner at preset time intervals'.

Among the setting of the diverse control information, the information utilized for the respective series of processing by means of the projection driver 130 are referred to by the corresponding modules. The format conversion module 136 outputs the information transferred to the projector PJ as control data, together with the projection data PD, to the projector PJ.

As clearly understood from the above explanation, the application program 110 executed by the computer PC corresponds to the image generation module of the present invention. The projection driver 130 executed by the computer PC corresponds to the video data conversion module of the present invention.

### A2. Construction and Operation of Projector PJ

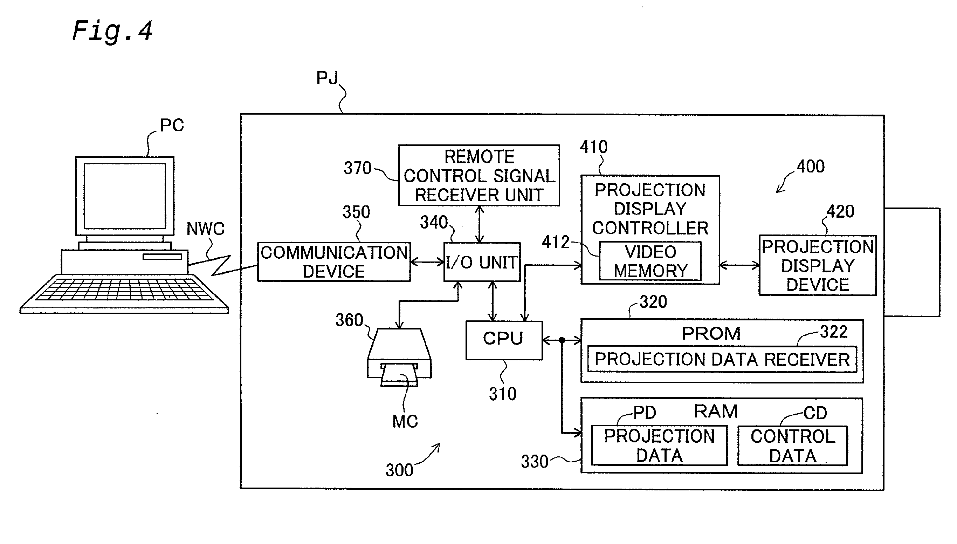

Fig. 4 is a block diagram schematically illustrating the internal structure of the projector PJ. The projector PJ has a projection data receiver module 300, which includes a CPU 310 that carries out diverse series of processing and controls according to computer programs, a programmable ROM (PROM) 320 that stores the computer programs therein, a RAM 330 that stores data obtained in the course of processing, an I/O unit 340 that transmits data to and from various peripheral devices, a communication device 350 that communicates with the computer PC via the network NWC. Like the communication device 140 of the computer PC (see Fig. 2), the communication device 350 may be a modem, a terminal adaptor, or a network card selected according to the type of the network NWC connected thereto. The projector PJ also has a projection display module 400, which includes a projection display device 420 that projects and displays an image and a projection display controller 410 that controls operations of the projection display device 420. The projector PJ further has a memory card socket 360 that stores various data in the memory card MC inserted therein and a remote control signal receiver unit 370 that receives a remote control signal transmitted from a remote controller (not shown). The communication device 350, the memory card MC inserted in the memory card socket 360, and the remote control signal receiver unit 370 are under control of the CPU 310 via the I/O unit 340.

The CPU 310 reads and executes a projection data receiver program stored in the PROM 320 and thereby functions as a projection data receiver 322.

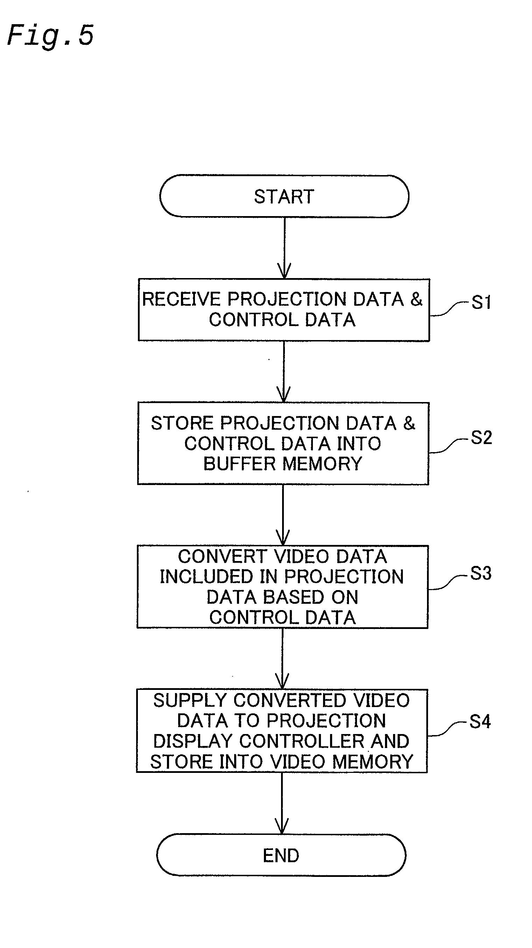

Fig. 5 is a flowchart showing a processing routine executed by the projection data receiver 322. In response to output of a printing instruction from the application program 110 of the computer PC shown in Fig. 2, the projection data PD and the control data CD are transmitted to the projector PJ. The projection data receiver 322 receives the transmitted projection data PD and control data CD via the communication device 350 at step S1. and stores the input projection data PD and control data CD into the RAM 330 functioning as the buffer memory at step S2.

The projection data receiver 322 then converts video data included in the projection data PD into video data in a specific format that allows supply to the projection display controller 410 based on the control data CD at step S3. The converted video data is stored into a video memory 412 in the projection display controller 410 at step S4.

The projection display controller 410 converts the video data stored in the video memory 412 into video data in a specific format that allows supply to the projection display device 420, and supplies the converted video data to the projection display device 420. The projection display device 420 projects and displays an image expressed by the supplied video data.

When the projection data PD includes multiple pages of video data and the information specifying that 'the multiple pages of video data are automatically displayed in a sequential manner at preset time intervals' is included in the control data CD as the page control information, the projection data receiver 322 iteratively carries out the processing of steps S3 and S4 according to this information, so as to display images of the multiple pages. When the information specifying that 'control of display is set in the projector' is included in the control data CD, on the other hand, the projection data receiver 322 iteratively carries out the processing of steps S3 and S4 according to control information transmitted from a remote control (not shown), so as to display images of the multiple pages.

As clearly understood from the above description, the projection data receiver 322 executed by the CPU 310 corresponds to the video data receiving and processing module of the present invention. The projection display controller 410 and the projection display device 420 correspond to the image display module of the present invention.

As described above, in the projection system including the computer PC and the projector PJ, in response to issuance of a printing instruction from the application program executed by the computer PC, the projection data PD representing the image of interest and the control data CD representing the control information of the projector PJ are transferred from the computer PC to the projector PJ. The projector PJ then projects an image expressed by the video data included in the transferred projection data PD according to the control data CD.

In the projection system of this embodiment, after the transfer of the projection data PD and the control data CD from the computer PC to the projector PJ in response to issuance of the printing instruction from the application program in the computer PC, the projector PJ carries out projection and display of an image, based on the independent projection data PD and control data CD transferred from the computer PC. The computer PC is accordingly free from the display operations of the projector PJ. Namely the arrangement of this embodiment is free of the problem arising in the first prior art method, which makes the operations of the computer inseparable from the control operations of the projector for display.

In the projection system of this embodiment, the video data transferred from the computer PC to the projector PJ does not follow the file data format depending upon the application program, but is output in response to the printing instruction independently of the application program. The arrangement of this embodiment is accordingly free of the problem arising in the second prior art method, which requires viewers corresponding to the respective types of the video data file to enable display of images by the projector and corresponding to the respective versions of the application program that works to generate the video data files.

The projection system of the embodiment projects an image expressed by video data generated by the computer according to the novel technique, which has solved the problems of the two prior art methods discussed previously.

### B. Application of Projection System

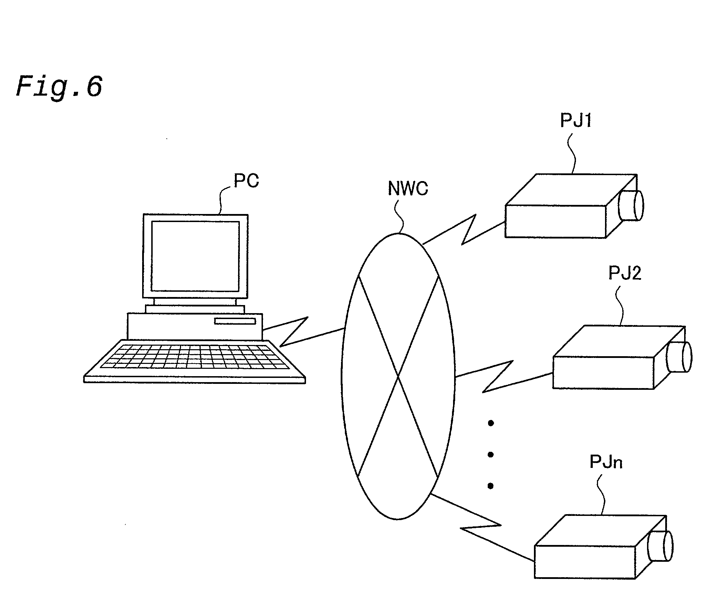

Fig. 6 is a block diagram illustrating the construction of another projection system according to the present invention. In this projection system, a plurality of projectors PJ1 to PJn (where n is an integer of not less than 2) are connected to the network NWC. The respective projectors PJ1 to PJn have an identical structure with that of the projector PJ.

In this projection system, one or multiple desired projectors are selected among the available projectors PJ1 to PJn on the print dialog box open by the application program 110 executed in the computer PC. The projection data PD and the control data CD are transferred to each of the selected projectors. Each selected projector, which has received the transferred projection data PD and control data CD, carries out projection and display independently of the computer PC.

In one possible application, a printing instruction with regard to a desired image, for example, an advertisement image, generated by the application program executed in the computer PC located in a head quarter is given to multiple projectors located in multiple branches. The video data representing the desired image is then transferred to the projectors in the respective branches. The projector in each branch projects and displays the desired image expressed by the transferred video data based on the simultaneously transferred control data in each branch independently of the computer PC.

### C. Modifications

The present invention is not restricted to the above embodiment or its application, but there may be many modifications, changes, and alterations without departing from the scope or spirit of the main characteristics of the present invention. All changes within the meaning and range of equivalency of the claims are therefore intended to be embraced therein. Some examples of possible modification are given below.

### C1. Modified Example 1

In the structure of the above embodiment, the computer PC is connected with the projector PJ via the network NWC. The connection is, however, not restricted to this structure. The computer PC may be connected to the projector PJ via any of diverse communication interfaces, for example, serial communication interfaces like RS-232 and USB, parallel communication interfaces like centronics, and wireless communication interfaces.

### C2. Modified Example 2

In the structure of the above embodiment, the application program 110 outputs the printing instruction. The technique of the present invention is, however, not restricted to this structure. In one possible application, in response to any arbitrary instruction to output video data from an external apparatus connecting with the computer PC, the projection driver 130 may first receive the output video data and then transmit the video data to the projector PJ.

### C3. Modified Example 3

The above embodiment and its modified examples regard the projector. The technique of the present invention is, however, not restricted to the projector, but is applicable to various image display apparatuses that display images generated by the computer.

The scope and spirit of the present invention are indicated by the appended claims, rather than by the foregoing description.

## Claims

1. An image display system, comprising:
an image supply apparatus that supplies video data via a predetermined communication interface in response to a printing instruction; and
an image display apparatus that receives the video data from the image supply apparatus via the predetermined communication interface and displays an image expressed by the video data,
the image supply apparatus comprising:
an image generation module that generates first video data representing an image of interest to be printed, in response to the printing instruction; and
a video data conversion processing module that receives the generated first video data, converts the first video data into second video data in a specific format that is receivable by the image display apparatus, and transmits the converted second video data via the predetermined communication interface,
the image display apparatus comprising:
a video data receiving and processing module that receives the second video data via the predetermined communication interface and converts the received second video data into third video data in a specified displayable format; and
an image display module that displays an image corresponding to the converted third video data.

2. An image display system in accordance with claim 1, the image display system comprising a plurality of the image display apparatuses,
the image supply apparatus comprising:
a plurality of the video data conversion processing modules corresponding to the plurality of image display apparatuses,
in the image supply apparatus,
the video data conversion processing module corresponding to one image display apparatus selected among the plurality of image display apparatuses receives the first video data generated in response to the printing instruction, converts the received first video data into second video data in a specific format that is receivable by the selected image display apparatus, and transmits the converted second video data to the selected image display apparatus via the predetermined communication interface.

3. An image display apparatus that displays an image expressed by video data, which is supplied from an image supply apparatus via a predetermined communication interface in response to a printing instruction, the image display apparatus comprising:
a video data receiving and processing module that receives the video data, which has been transmitted from the image supply apparatus to the image display apparatus via the predetermined communication interface in response to the printing instruction, and converts the received video data into video data in a specified displayable format; and
an image display module that displays an image corresponding to the video data converted by the video data receiving and processing module.

4. An image display apparatus in accordance with claim 3, the image display apparatus being a projector having a projection display function, which causes the image display module to project an image.

5. An image display method that causes video data to be supplied from an image supply apparatus via a predetermined communication interface in response to a printing instruction and causes an image display apparatus to display an image expressed by the supplied video data, the image display method comprising the steps of:
(a) causing the image supply apparatus to generate first video data representing an image of interest to be printed, in response to the printing instruction;
(b) causing the image supply apparatus to receive the generated first video data and convert the first video data into second video data in a specific format that is receivable by the image display apparatus;
(c) causing the image supply apparatus to transmit the converted second video data to the image display apparatus via the predetermined communication interface;
(d) causing the image display apparatus to receive the second video data via the predetermined communication interface and convert the received second video data into third video data in a specified displayable format; and
(e) causing the image display apparatus to display an image corresponding to the converted third video data.

6. A computer program product that is used to supply video data to an image display apparatus via a predetermined communication interface in response to a printing instruction; the computer program product comprising:
a first program code functioning to convert first video data, which is generated in response to the printing instruction and represents an image of interest to be printed, into second video data in a specific format that is receivable by the image display apparatus;
a second program code functioning to transmit the second video data to the image display apparatus via the predetermined communication interface; and
a computer readable medium in which the first program code and the second program code are recorded.

7. A computer program that is used to supply video data to an image display apparatus via a predetermined communication interface in response to a printing instruction; the computer program comprising:
a first program code functioning to convert first video data, which is generated in response to the printing instruction and represents an image of interest to be printed, into second video data in a specific format that is receivable by the image display apparatus; and
a second program code functioning to transmit the second video data to the image display apparatus via the predetermined communication interface.
